(19) Europäisches Patentamt
European Patent Office
Office européen des brevets

(11) **EP 4 142 010 A1**

(12) **EUROPEAN PATENT APPLICATION**
published in accordance with Art. 153(4) EPC

(43) Date of publication:
**01.03.2023 Bulletin 2023/09**

(21) Application number: **22760033.5**

(22) Date of filing: **23.02.2022**

(51) International Patent Classification (IPC):
**H01M 10/0569** (2010.01)  **H01M 10/0567** (2010.01)
**H01M 4/40** (2006.01)  **H01M 4/38** (2006.01)
**H01M 10/052** (2010.01)

(52) Cooperative Patent Classification (CPC):
**H01M 4/38; H01M 4/40; H01M 10/052;**
**H01M 10/0567; H01M 10/0569;** Y02E 60/10

(86) International application number:
**PCT/KR2022/002634**

(87) International publication number:
**WO 2022/182117 (01.09.2022 Gazette 2022/35)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.02.2021 KR 20210026115**

(71) Applicant: **LG Energy Solution, Ltd.**
**Seoul 07335 (KR)**

(72) Inventors:
• **LEE, Dojoong**
**Daejeon 34122 (KR)**
• **KIM, Myeongseong**
**Daejeon 34122 (KR)**
• **KIM, Yunjung**
**Daejeon 34122 (KR)**
• **KIM, Kihyun**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **LITHIUM SECONDARY BATTERY**

(57)    The present invention relates to a lithium secondary battery. More specifically, the lithium secondary battery may, due to an interaction between a Li-Mg alloy included in an anode and a furan-based solvent included in an electrolyte, inhibit growth of lithium dendrites, and may inhibit a side reaction between lithium sulfide eluted from a cathode and a lithium anode, thereby improving lifespan characteristics of the battery.

FIG. 1

## Description

### CROSS-REFERENCE TO RELATED APPLICATION(S)

This application is a National Stage Application of International Application No. PCT/KR2022/002634, filed on November 22, 2021, which claims the benefit of priority based on Korean Patent Application No. 2021-0026115 filed on February 26, 2021.

### Field

The present disclosure relates to a lithium secondary battery.

### Background

A lithium-sulfur secondary battery is a secondary battery including lithium metal having a large theoretical capacity as a negative electrode active material and sulfur as a positive electrode active material, which has the advantage of being able to implement a higher energy density compared to the existing lithium secondary battery.

However, for the commercialization of the lithium-sulfur secondary battery, there are several problems to be solved. First, a short circuit between a negative electrode and a positive electrode may occur due to formation of dendrites in process of depositing lithium on the negative electrode during charging. Second, since the positive electrode active material is dissolved in electrolyte in the form of lithium polysulfide (LiPS), thereby shuttling to the negative electrode and then forming a lithium-sulfur compound, loss of the positive electrode active material and passivation of the negative electrode may occur.

In order to solve this problem, it is necessary to introduce a negative electrode protective layer that can control the lithium dendrite and simultaneously prevent a side reaction between lithium and sulfur, or to develop a novel lithium composite material that enables uniform lithium deposition by improving diffusivity on a surface of the lithium.

Korean Patent Publication No. 10-2020-0007081 discloses a novel lithium composite material applied to an anode (negative electrode) of an electrochemical cell, which is a solid solution of lithium and one or more non-lithium metals. The non-lithium metal forms a solid solution with lithium to function as a current collector, but still has limitations in inhibiting formation of lithium dendrites and leaching of polysulfide, which still are problems of lithium-sulfur secondary battery.

Therefore, development of a novel lithium composite material, which is capable of suppressing the formation of lithium dendrites and suppressing the side reaction between lithium and sulfur in a lithium secondary battery, is still needed.

### Related Art

Korean Patent Application Publication No. 10-2020-0007081

### Summary

With respect to the above, the present inventors have confirmed that, when a lithium alloy is applied as a lithium negative electrode active material and a furan-based solvent is applied as a solvent of an electrolyte in order to solve the problems of the related art, it is possible to suppress the growth of lithium dendrites in the lithium negative electrode and to suppress the side reaction between lithium and sulfur even if sulfur is comprised in the positive electrode active material, thereby improving lifetime characteristic of a battery.

Accordingly, it is an object of the present disclosure to provide a lithium secondary battery which can have improved lifetime characteristic by suppressing the formation of lithium dendrites at a negative electrode and suppressing a side reaction between lithium and sulfur at the negative electrode.

In order to achieve the above object, the present disclosure provides a lithium secondary battery comprising a positive electrode, a negative electrode, a separator and an electrolyte, wherein the negative electrode comprises a lithium-magnesium (Li-Mg) alloy, and the electrolyte comprises a furan-based solvent, a lithium salt, and an additive.

In the lithium secondary battery according to the present disclosure, the Li-Mg alloy contained in the negative electrode and the furan-based solvent contained in the electrolyte suppress the growth of lithium dendrites and the side reaction between lithium and the electrolyte, thereby improving the lifetime characteristic of the battery.

Brief Description of Drawings

FIG. 1 is a schematic diagram showing the crystal structure of a Li-Mg alloy and of a Li-Al alloy (or Li-Zn alloy).
FIG. 2A is a graph showing the lifetime characteristics of Example 1 and Comparative Examples 3 to 5.
FIG. 2B is a graph showing the lifetime characteristics of Comparative Examples 1 and 2.
FIG. 3 shows an optical photograph and a 3D stereoscopic photograph of surfaces of the negative electrodes of Example 1 and Comparative Example 4.
FIGs. 4A shows a cross-sectional SEM (scanning electron microscope) photograph and a result of EDS (Energy Dispersive X-ray Spectroscopy) analysis of the negative electrode of Example 1.
FIG. 4B shows a cross-sectional SEM photograph and a result of EDS analysis of the negative electrode of Comparative Example 4.

Detailed Description

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

**Lithium secondary battery**

The present disclosure relates to a lithium secondary battery comprising a positive electrode, a negative electrode, a separator, and an electrolyte, wherein the negative electrode comprises a Li-Mg alloy, and the electrolyte comprises a furan-based solvent, a lithium salt, and an additive.

The Li-Mg alloy may inhibit the growth of lithium dendrites by increasing lithium-ion diffusivity on the surface of the negative electrode. In addition, the Li-Mg alloy can control the side reaction between lithium and the electrolyte by adsorbing polysulfides leached from the positive electrode.

The furan-based solvent can reduce the side reaction by forming a protective layer on the surface of the negative electrode including the Li-Mg alloy while the ring of the furan component is decomposed, thereby improving the lifetime of the lithium secondary battery.

In the present disclosure, the Li-Mg alloy is a solid solution of lithium and magnesium, and the solid solution means a mixture of solids forming a completely uniform phase.

Mg is an alloying element capable of forming a solid solution with Li, and Li-Mg alloy is especially applied as a negative electrode active material for lithium secondary batteries to inhibit the growth of lithium dendrites and to adsorb polysulfides, thereby suppressing the side reaction between lithium and the electrolyte.

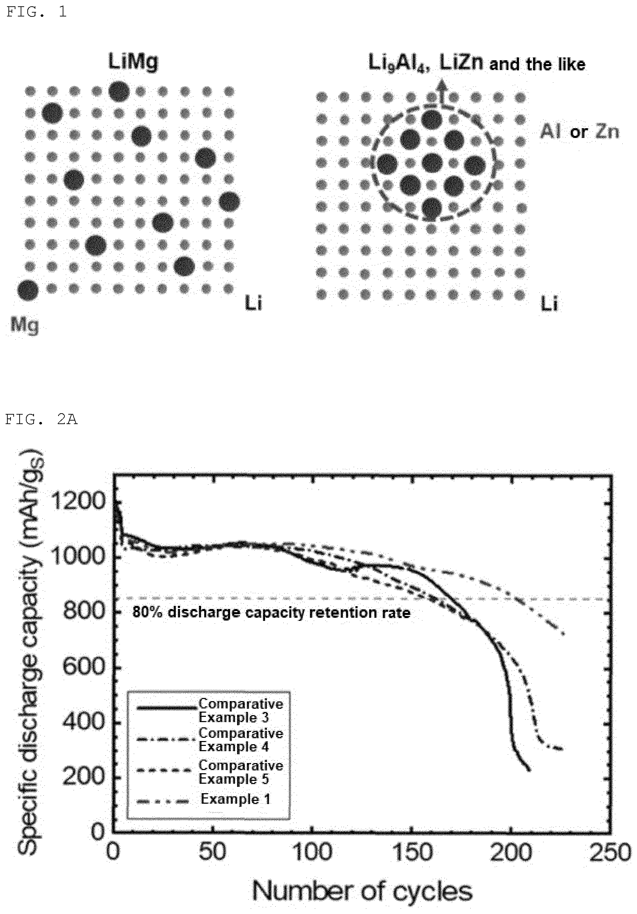

FIG. 1 is a schematic diagram showing the crystal structure of a Li-Mg alloy and of a Li-Al alloy (or Li-Zn alloy).

As shown in FIG. 1, in the case of the Li-Mg alloy, Mg atoms are uniformly distributed in Li atoms in the crystal structure. Mg exhibits high solid solubility in Li. Therefore, Mg does not form a new phase such as a separate intermetallic compound in the Li crystal structure, and Mg is substituted in the existing Li position to form a solid solution.

On the other hand, in the case of a Li-Al alloy or a Li-Zn alloy among alloys, Al atoms or Zn atoms in Li atoms in the crystal structure form a new intermetallic compound. Since the intermetallic compound exists in a segregated form at a local specific location such as a grain boundary of Li, which is a particle form and does not mix with lithium and thus forms a new phase, there may be no effect due to the alloy. In this case, the new intermetallic compound may be formed in various forms depending on the ratio between elements. For example, the Li-Al alloy may be $Li_9Al_4$, $Li_3Al_2$, or the like, and the Li-Zn alloy may be $LiZn$, $Li_2Zn_3$, or the like.

In addition, the solid solubility of Mg in the Li-Mg alloy may be more than 0 wt.%, 90 wt.% or less (more than 0 at.%, 70 at.% or less). At this time, solid solubility means the weight of Mg contained in the Li-Mg alloy in the form of a solid solution. If the solid solubility of Mg is 0 wt.%, the effect of inhibiting the growth of lithium dendrites and the effect of inhibiting the side reaction of lithium and sulfur may be insignificant. If the solid solubility of Mg is more than 90 wt.%, since the crystal structure of lithium cannot be maintained, the negative electrode active material is no longer lithium, but Mg metal having a different crystal structure, and thus and the capacity of the battery may be reduced due to a decrease in the capacity of lithium, which is the negative electrode active material. The Mg metal having a different crystal structure may be, for example, $\alpha$-Mg.

In the lithium secondary battery according to the present disclosure, the negative electrode may comprise a Li-Mg alloy as a negative electrode active material. The Li-Mg alloy not only exhibits the original function of the basic negative electrode active material as described above, but also can inhibit the growth of the lithium dendrites and can prevent side reactions between lithium and sulfur. The Li-Mg alloy may be in the form of a foil made of individual particles.

In addition, the negative electrode active material layer itself may act as a negative electrode current collector, but may also be formed on a separate negative electrode current collector to reduce the resistance of the battery. The negative electrode current collector is not particularly limited as long as it has high conductivity without causing chemical changes in the battery, and for example, copper, stainless steel, aluminum, nickel, titanium, sintered carbon, or copper, or stainless steel surface-treated with carbon, nickel, titanium, silver or the like, or aluminum-cadmium alloy may be used. In addition, the negative electrode current collector may typically have a thickness of $3\mu m$ to $500\mu m$, and may form fine irregularities on the surface of the current collector to strengthen the bonding force of the negative electrode active material, as with the positive electrode current collector. For example, the negative electrode current collector may be used in various forms such as a film, sheet, foil, net, porous body, foam, non-woven body, and the like.

In addition, the thickness of the negative electrode may be more than 0 gm, 200 $\mu m$ or less, specifically, more than 0 $\mu m$, 50 $\mu m$ or more, or 80 $\mu m$ or more, and 120 $\mu m$ or less, 150 $\mu m$ or less, or 200 $\mu m$ or less. In this case, the thickness of the negative electrode may be that of the Li-Mg alloy, and when it falls within the thickness range specified as above, the growth of the lithium dendrites is suppressed, and the leaching of the polysulfides from the positive electrode is prevented.

In the lithium secondary battery according to the present disclosure, the positive electrode may comprise a positive electrode active material layer, and the positive electrode active material layer may comprise a positive electrode active material, a binder, and an electrically conductive material.

The positive electrode active material may comprise one or more selected from the group consisting of inorganic sulfur, $Li_2Sn$ ($n\geq 1$), a disulfide compound, an organic sulfur compound, and a carbon-sulfur polymer. The positive electrode active material may be contained in an amount of 70 to 95 wt.% based on the total weight of the positive electrode active material layer. In addition, the positive electrode may also further comprise an additional positive electrode active material in addition to the above-described positive electrode active material. The additional positive electrode active material is not particularly limited as long as it is used as a general positive electrode active material for a lithium secondary battery. For example, the additional positive electrode active material may be $LiCoO_2$, $LiNiO_2$, $LiMnO_2$, $LiMn_2O_2$, $Li(Ni_aCo_bMn_c)O_2$ ($0<a<1$, $0<b<1$, $0<c<1$, $a+b+c=1$), $LiNi_{1-d}Co_dO_2$, $LiCo_{1-d}Mn_dO_2$, $LiNi_{2-d}Mn_dO_2$($0\leq d<1$), $Li(Ni_aCo_bMn_c)O_2$ ($0<a<2$, $0<b<2$, $0<c<2$, $a+b+c=2$), $LiMn_{2-e}Ni_eO_4$, $LiMn_{2-e}Co_eO_4$ ($0<e<2$), $LiCoPO_4$, $LiFePO_4$ or the like, and any one or a mixture of two or more thereof may be used.

In addition, the electrically conductive material is used to impart conductivity to the positive electrode, which can be used without any particular limitation as long as it has electronic conductivity without causing chemical changes in the constituted battery. Specific examples may be carbon-based material such as carbon black, acetylene black, Ketjen black, channel black, furnace black, lamp black, thermal black, carbon fiber and the like; graphite such as natural graphite or artificial graphite; metal powders or metal fibers such as copper, nickel, aluminum, silver and the like; electrically conductive whiskers such as zinc oxide and potassium titanate; electrically conductive metal oxides such as titanium oxide; or electrically conductive polymers such as polyphenylene derivatives and the like, and any one or a mixture of two or more thereof may be used. The electrically conductive material may be contained in an amount of 1 wt.% to 20 wt.% based on the total weight of the positive electrode active material layer.

In addition, the binder serves to improve the adhesive force between the particles of the positive electrode active material and the adhesive force between the positive electrode active material and the current collector. Specific examples may be polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinyl pyrrolidone, tetrafluoroethylene, polyethylene, polypropylene, ethylenepropylene-diene monomer (EPDM), sulfonated-EPDM, styrenebutadiene rubber (SBR), fluorine rubber, or various copolymers thereof, and any one or a mixture of two or more thereof may be used. The binder may be contained in an amount of 1 wt.% to 20 wt.% based on the total weight of the positive electrode active material layer.

In the lithium secondary battery according to the present disclosure, the separator separates the negative electrode and the positive electrode and provides a passage for lithium ions to move. The separator can be used without any particular limitation as long as it is usually used as a separator in a lithium secondary battery. As the separator, it is particularly preferable to have low resistance to ion movement of the electrolyte and excellent electrolyte impregnation ability. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may be used. In addition, a conventional porous nonwoven fabric, for example, a nonwoven fabric made of high melting point glass fiber, polyethylene terephthalate fiber, etc. may be used. In addition, a coated separator containing a ceramic component or a polymer material may be used to secure heat resistance or mechanical strength, and the separator may be selectively used in a single-layer or multi-layer structure.

In the lithium secondary battery according to the present disclosure, the electrolyte may comprise a furan-based solvent, a lithium salt, and an additive.

The furan-based solvent is a heterocyclic compound containing one or more double bonds, and specifically, for example, may comprise one or more selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, thiophene, 2-methylthiophene, 2-ethylthiophene, 2-propylthiophene, 2-butylthiophene, 2,3-dimethylthiophene, 2,4-dimethylthiophene, and 2,5-dimethylthiophene, and preferably may comprise one or more selected from the group consisting of 2-methylfuran and 2-methylthiophene.

In addition, the furan-based solvent may comprise an additional organic solvent, and the additional organic solvent may be dimethoxyethan (DME); ester-based solvents such as methyl acetate, ethyl acetate, $\gamma$-butyrolactone, or $\varepsilon$-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC); alcohol-based solvents such as ethyl alcohol, isopropyl alcohol; nitriles such as R-CN (wherein R is a C2 to C20 linear, branched or cyclic hydrocarbon group, and may contain a double bond, an aromatic ring or an ether bond); amides such as dimethylformamide; dioxolanes such as 1,3-dioxolane (DOL); or sulfolanes. Preferably, the furan-based solvent may include a mixed solvent of 2-methylfuran (2ME-F) and dimethoxyethane (DME).

In addition, the lithium salt may be used without particular limitation as long as it is a compound capable of providing lithium ions used in the lithium secondary battery. Specifically, the lithium salt may be LiFSI (lithium bis(fluorosulfonyl)imide), LiTFSI (lithium bis(trifluoromethanesulfonyyl)imide), $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$ or the like. The concentration of the lithium salt is preferably in the range of 0.1 M to 2.0 M. If the concentration of the lithium salt is included in the above range, since the electrolyte has the appropriate conductivity and viscosity, excellent electrolyte performance can be exhibited, and lithium ions can be effectively moved.

In addition, the additive may comprise a nitric acid-based compound, and the nitric acid-based compound may be selected from lithium nitrate ($Li(NO_3)$), potassium nitrate ($KNO_3$), cesium nitrate ($CsNO_3$), magnesium nitrate ($MgNO_3$), barium nitrate ($BaNO_3$), potassium nitrite ($KNO_2$) and cesium nitrite ($CsNO_2$). In this case, the additive may be contained in an amount of 0.1 wt.% to 10 wt.% based on the total weight of the electrolyte.

Also, in addition to the nitric acid-based compound, for the purpose of improving the lifetime characteristic of the battery, suppressing the decrease in the capacity of the battery, improving the discharge capacity of the battery and so on, for example, one or more additives such as haloalkylene carbonate-based compounds such as difluoroethylene carbonate; pyridine, triethylphosphite, triethanolamine, cyclic ethers, ethylene diamine, n-glyme, hexaphosphoric acid triamide, nitrobenzene derivatives, sulfur, quinone imine dye, N-substituted oxazolidinone, N,N-substituted imidazolidines, ethylene glycol dialkyl ethers, ammonium salts, pyrrole, 2-methoxyethanol, or aluminum trichloride may be further comprised.

As described above, since the lithium secondary battery according to the present disclosure stably exhibits excellent discharge capacity, output characteristic and capacity retention rate, it may be used as a device power source in portable devices such as mobile phones, laptop computers, and digital cameras; and an electric vehicle field such as a hybrid electric vehicle (HEV).

**Lithium-sulfur secondary battery**

The present disclosure also relates to a lithium-sulfur secondary battery.

The positive electrode of the lithium-sulfur secondary battery comprises a sulfur-containing material, and the negative electrode comprises a Li-Mg alloy, and as the solvent of the electrolyte, 2-methylfuran (2ME-F) may be comprised, and as the lithium salt, LiFSI may be comprised. Specifically, the solvent is a mixed solvent of 2-methylfuran (2ME-F) and dimethoxyethane (DME).

By incorporating the Li-Mg alloy of the negative electrode and 2-methylfuran (2ME-F) of the electrolyte together, and thus effectively inhibiting the growth of lithium dendrites and suppressing the side reaction between lithium and sulfur, the lifetime characteristic of the battery can be improved.

Hereinafter, preferred examples of the present disclosure will be described in order to facilitate understanding of the present disclosure. It will be apparent to those skilled in the art, however, that the following examples are illustrative of the present disclosure and that various changes and modifications can be made within the scope and spirit of the present disclosure, and also it is natural that such variations and modifications are within the scope of the appended claims.

**Example 1**

**1-1.Manufacture of negative electrode**

A Li-Mg alloy having a thickness of 100 $\mu$m was prepared as a negative electrode. In this case, the Li-Mg alloy is one in which Mg is alloyed in an amount of 1 wt.%. Mg was heated together with lithium ingot so that the Mg content was as much as 1 wt.%, melted and mixed, cooled to room temperature, and rolled with a roll press machine to prepare a Li-Mg alloy foil having a thickness of 100 $\mu$m as a negative electrode. A separate current collector is not used.

**1-2.Manufacture of positive electrode**

Sulfur and carbon nanotube (CNT) were mixed in a weight ratio of 75:25 to prepare a sulfur-carbon composite. Sulfur and CNTs were mixed and heated, so that sulfur was supported on the carbon composite by a melt diffusion method.
As a positive electrode active material, an electrically conductive material, and a binder, respectively, the sulfur-carbon composite, carbon black, and polyvinylidene fluoride (PVDF) were mixed at a weight ratio of 87.5:5:7.5 in a distilled water solvent to prepare a slurry for a positive electrode. The slurry of the positive electrode was applied to one surface of an Al foil current collector, dried at 80°C, and then rolled with a roll press machine to prepare the positive electrode. The loading of the positive electrode was made to be 3 mg/cm$^2$.

**1-3. Preparation of electrolyte**

0.75M LiFSI as a lithium salt and 5 wt.% of LiNO$_3$ as an additive was added to a mixed solvent (2ME-F:DME=1:4(v/v)) of 2-methylfuran (2ME-F) and dimethoxyethane (DME) in a volume ratio of 1:4 to prepare an electrolyte.

**1-4.Manufacture of lithium-sulfur secondary battery**

A porous polyethylene separator was inserted between the positive electrode and the negative electrode and stacked to assemble a pouch cell, and then an electrolyte was injected and sealed to manufacture a pouch cell lithium-sulfur secondary battery.

**Comparative Example 1**

A lithium-sulfur secondary battery was manufactured in the same manner as in Example 1, except that as the negative electrode and the solvent of the electrolyte, bare Li and DOL/DME (5:5 (v/v)) were used instead of the Li-Mg alloy and 2ME-F/DME (2:8 (v/v)) (wherein DOL is 1,3-Dioxolane).

**Comparative Example 2**

A lithium-sulfur secondary battery was manufactured in the same manner as in Example 1, except that as the solvent of the electrolyte, DOL/DME (5:5 (v/v)) were used instead of 2ME-F/DME (2:8 (v/v)) (wherein DOL is 1,3-Dioxolane).

**Comparative Example 3**

A lithium-sulfur secondary battery was manufactured in the same manner as in Example 1, except that as the negative electrode, Li was used instead of the Li-Mg alloy.

**Comparative Example 4**

A lithium-sulfur secondary battery was manufactured in the same manner as in Example 1, except that as the negative electrode, a Li-Al alloy (Al 1 wt.%) was used instead of the Li-Mg alloy.

**Comparative Example 5**

A lithium-sulfur secondary battery was manufactured in the same manner as in Example 1, except that as the negative electrode, a Li-Zn alloy (Zn 5 wt.%) was used instead of the Li-Mg alloy.

**Experimental Example 1**

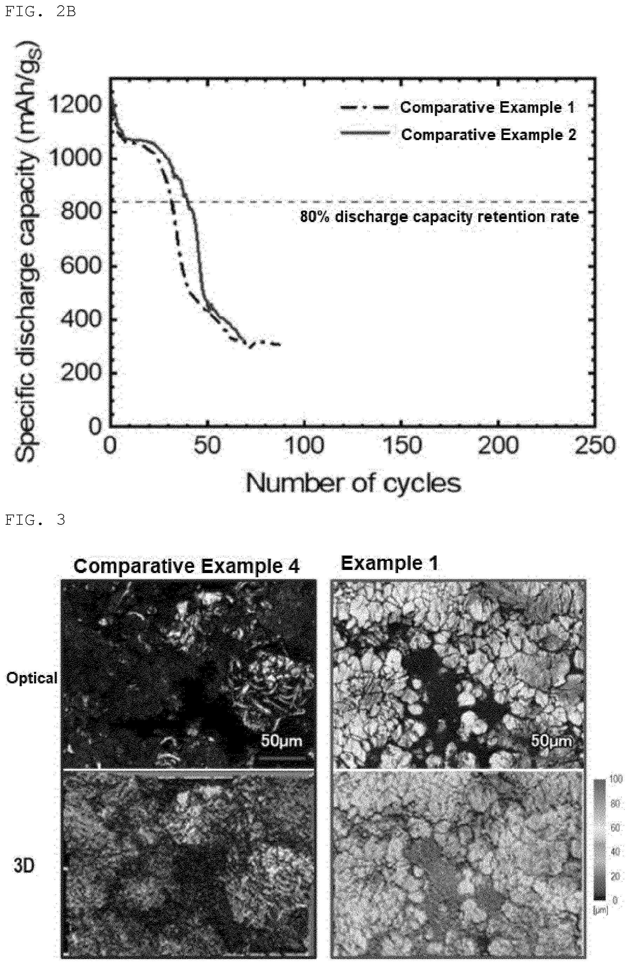

For the pouch cell-type lithium-sulfur secondary batteries manufactured in Example 1 and Comparative Examples 1 to 5, a 0.2C charging/0.3C discharging cycle at 25°C was operated in a constant current (CC) mode, and then physical properties including discharge capacity were measured, and the results are shown in Table 1 and FIGs. 2A and 2B below.

Table 1:

| | Negative electrode | | | | Electrolyte | Lifetime (number of cycles) (based on 80% discharge capacity retention rate) |
|---|---|---|---|---|---|---|
| | Negative electrode active material | Alloy element | Content | | Solvent | |
| | | | wt. % | at.% | | |
| Comparative Example 1 | Li | - | - | - | DOL/DME (5:5 (v/v)) | 31 |
| Comparative Example 2 | Li-Mg | Mg | 1 | 0.3 | DOL/DME (5:5 (v/v)) | 39 |
| Comparative Example 3 | Li | - | - | - | 2Me-F/DME (2:8 (v/v)) | 168 |
| Comparative Example 4 | Li-Al | Al | 1 | 0.26 | 2Me-F/DME (2:8 (v/v)) | 167 |
| Comparative Example 5 | Li-Zn | Zn | 5 | 0.56 | 2Me-F/DME (2:8 (v/v)) | 158 |
| Example 1 | Li-Mg | Mg | 1 | 0.3 | 2Me-F/DME (2:8 (v/v)) | 203 |

As shown in Table 1 and FIGs. 2A and 2B, the lifetime characteristic of Example 1 was significantly superior to those of Comparative Examples 1 to 5.

Comparative Example 3, Comparative Example 4, and Comparative Example 5 comprised the same 2Me-F/DME solvent as the electrolyte solvent in Example 1, but comprised bare Li, the Li-Al alloy, and the Li-Zn alloy as negative electrodes, respectively, and thus they showed poor lifetime characteristic compared to Example 1.

This result is due to the fact that in the case of Example 1, as Li and Mg form a solid solution, Mg is uniformly distributed at the atomic level without forming a separate intermetallic compound in the lithium negative electrode, and according to this uniform distribution of Mg, the formation of lithium dendrites is more effectively suppressed, and lithium plating/stripping is performed uniformly. On the other hand, since the Li-Al alloy and Li-Zn alloy in Comparative Example 4 and Comparative Example 5 form intermetallic compounds such as $Li_9Al_4$ and LiZn, the alloying elements are segregated only in localized regions such as grain boundaries of lithium in the form of nonuniform particles, which is not effective for suppression of lithium dendrites and uniform plating/stripping of lithium.

From this, it was confirmed that the lithium-sulfur secondary battery containing a Li-Mg alloy in the negative electrode and a mixed solvent containing 2-methylfuran (2ME-F), which is a furan-based solvent, as an electrolyte solvent, has a good lifetime characteristic.

For the pouch cell-type lithium-sulfur secondary batteries prepared in Example 1 and Comparative Example 4, a 0.2C charging/0.3C discharging cycle at 25°C was operated in a constant current (CC) mode, and then after 120 cycles, physical properties such as state of charge (SOC) 100 and discharge capacity retention were measured as follows, and the results are shown in Table 2 below:

(1) Discharge capacity retention rate

Capacity after 120 cycles compared to initial capacity was calculated as a percentage.

(2) Thickness of negative electrode

The thickness of the negative electrode was measured using a thickness measuring device (TESA, μ-hite).

(3) Porosity of the negative electrode

The porosity of the negative electrode was calculated by Equation 1 below:

```
<Equation 1>
Porosity of the negative electrode (%) = 100 x [1-
(Density of negative electrode after operation/Density of
negative electrode before operation)]
```

In Equation 1, the density of the negative electrode was calculated by dividing the weight per unit area of the negative electrode by the thickness.
(4) Average roughness and maximum step difference
The average roughness and the maximum step difference were measured using a laser microscope (KEYENCE VK-X100 Series) .

Table 2:

| | Negative electrode active material | Discharge capacity retention rate (%) | Thickness of negative electrode | | | Porosity of negative electrode (%) | Average roughne ss ($\mu$m) | Maximum step differe nce ($\mu$m) |
| --- | --- | --- | --- | --- | --- | --- | --- | --- |
| | | | Thickness before operation ($\mu$m) | Thickness after operation ($\mu$m) | Increase rate of thickness (%) | | | |
| Example 1 | Li-Mg alloy | 91 | 100 | 180 | 80 | 29 | 4 | 28 |
| Comparative Example 4 | Li-Al alloy | 82 | 100 | 219 | 119 | 38 | 19 | 81 |

As shown in Table 2 above, it was confirmed that Example 1 comprising a Li-Mg alloy in the negative electrode for the lithium-sulfur secondary battery shows a high discharge capacity retention rate, a low increase rate of thickness, a low porosity of the negative electrode, and a low average roughness, even after 120 cycles of operation. It can be seen that the low porosity of the negative electrode and the maintenance of the uniform surface are the reasons for the improvement of the lifetime of the battery.

FIG. 3 is an optical photograph and a 3D stereoscopic photograph of the surface of negative electrodes of Example 1 and Comparative Example 1. The negative electrodes of Example 1 and Comparative Example 1 are in the SOC 100 state after 120 cycles. The optical photograph and 3D stereoscopic photograph were taken using a laser microscope (KEYENCE VK-X100 Series).

As shown in FIG. 3, the negative electrode comprising the Li-Al alloy of Comparative Example 4 showed that most of the area is degraded and the step difference is very large. On the other hand, it was confirmed that the negative electrode comprising the Li-Mg alloy of Example 1 maintains lithium metal in an area of no less than 80% of the total area and has a low step difference, and thus the physical structure of the negative electrode is maintained in a stable state.

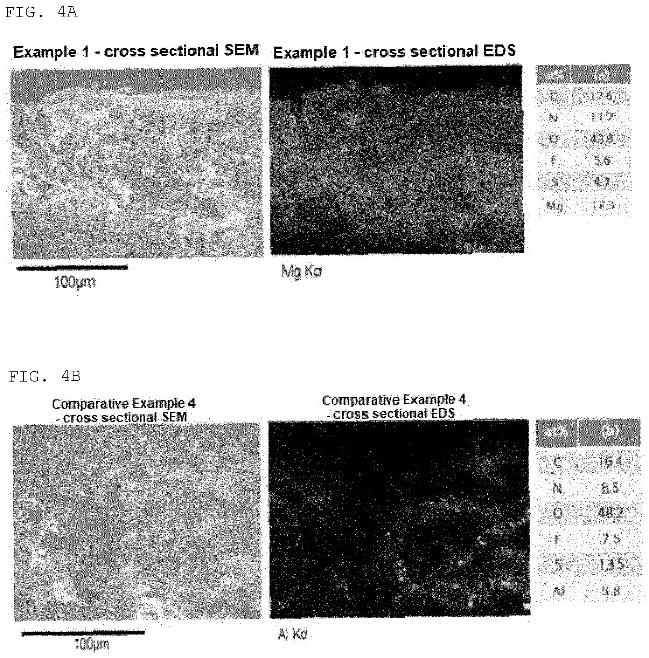

FIGs. 4A and 4B are cross-sectional SEM (scanning electron microscope) photographs and results of EDS (Energy Dispersive X-ray Spectroscopy) analysis of negative electrodes of Example 1 and Comparative Example 4, respectively. The negative electrodes of Example 1 and Comparative Example 1 are in the SOC 100 state after 120 cycles. SEM photographic measurement and EDS analysis were performed using SEM-EDS (JEOL FESEM, JSM-7610F). Prior to operation, no sulfur was detected in both Example 1 and Comparative Example 4.

As shown in FIGs. 4A and 4B, in the case of the Li-Mg alloy negative electrode of Example 1, it was found that Mg is still uniformly distributed in the lithium metal negative electrode even after 120 cycles of operation. On the contrary, in the case of the Li-Al alloy negative electrode of Comparative Example 4, it was found that a byproduct containing a large amount of sulfur is formed by the side reaction of lithium and sulfur, which is a positive electrode active material.

From this, it was confirmed that in the case of the Li-Mg alloy negative electrode of Example 1, Mg forms a solid solution with Li and is evenly distributed, and the side reaction between lithium and sulfur can be suppressed.

In the above, although the present disclosure has been described by way of limited embodiments and drawings, the present disclosure is not limited thereto, and it is apparent to those skilled in the art that various modifications and variations can be made within the equivalent scope of the technical spirit of the present disclosure and the claims to be described below.

**Claims**

1. A lithium secondary battery comprising a positive electrode, a negative electrode, a separator, and an electrolyte,

   wherein the negative electrode comprises a lithium-magnesium (Li-Mg) alloy and
   wherein the electrolyte comprises a furan-based solvent, a lithium salt, and an additive.

2. The lithium secondary battery according to claim 1, wherein the Li-Mg alloy is a solid solution containing Mg in an amount of more than 0 wt.% to 90 wt.%.

3. The lithium secondary battery according to claim 1, wherein the Li-Mg alloy is in the form of a foil.

4. The lithium secondary battery according to claim 1, wherein a thickness of the negative electrode is more than 0 $\mu$m to 200 $\mu$m.

5. The lithium secondary battery according to claim 1, wherein the furan-based solvent comprises one or more selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, thiophene, 2-methylthiophene, 2-ethylthiphene, 2-propylthiophene, 2-butylthiophene, 2,3-dimethylthiophene, 2,4-dimethylthiophene, and 2,5-dimethylthiophene.

6. The lithium secondary battery according to claim 1, wherein the lithium salt comprises one or more selected from the group consisting of LiFSI(lithium bis(fluorosulfonyl)imide), LiTFSI(lithium bis(trifluoromethanesulfonyyl)imide), LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, CF$_3$SO$_3$Li, LiSCN, LiC(CF$_3$SO$_2$)$_3$, (CF$_3$SO$_2$)$_2$NLi, (FSO$_2$)$_2$NLi, lithium chloroborane, lithium lower aliphatic carboxylate, lithium 4-phenyl borate and lithium imide.

7. The lithium secondary battery according to claim 1, wherein the additive comprises one or more selected from the group consisting of lithium nitrate (Li(NO$_3$), potassium nitrate (KNO$_3$), cesium nitrate (CsNO$_3$), magnesium nitrate (MgNO$_3$), barium nitrate (BaNO$_3$), potassium nitrite (KNO$_2$), and cesium nitrite (CsNO$_2$).

8. The lithium secondary battery according to claim 1, wherein the positive electrode comprises one or more selected from the group consisting of inorganic sulfur, Li$_2$Sn (n$\geq$1), a disulfide compound, an organic sulfur compound, and a carbon-sulfur polymer.

FIG. 1

LiMg

Li₉Al₄, LiZn and the like

Mg

Li

Al or Zn

Li

FIG. 2A

FIG. 2B

FIG. 3

FIG. 4A

**Example 1 - cross sectional SEM** **Example 1 - cross sectional EDS**

100µm

Mg Kα

| at% | (a) |
|-----|------|
| C | 17.6 |
| N | 11.7 |
| O | 43.8 |
| F | 5.6 |
| S | 4.1 |
| Mg | 17.3 |

FIG. 4B

Comparative Example 4
- cross sectional SEM

Comparative Example 4
- cross sectional EDS

100µm

Al Kα

| at% | (b) |
|-----|------|
| C | 16.4 |
| N | 8.5 |
| O | 48.2 |
| F | 7.5 |
| S | 13.5 |
| Al | 5.8 |

## INTERNATIONAL SEARCH REPORT

| International application No. |
| --- |
| **PCT/KR2022/002634** |

### A. CLASSIFICATION OF SUBJECT MATTER

**H01M 10/0569**(2010.01)i; **H01M 10/0567**(2010.01)i; **H01M 4/40**(2006.01)i; **H01M 4/38**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 10/0569(2010.01); H01M 10/05(2010.01); H01M 10/052(2010.01); H01M 10/0567(2010.01); H01M 10/0568(2010.01); H01M 10/058(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬황 전지(lithium-sulfur battery), 마그네슘(magnesium), 합금(alloy), 전해질 (electrolyte), 퓨란(furan)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2020-0061293 A (LG CHEM, LTD.) 02 June 2020 (2020-06-02) See claims 1, 5 and 11; paragraphs [0041], [0050], [0053], [0064], [0068], [0081], [0097] and [0098]; and table 1. | 1-8 |
| A | KR 10-2019-0125740 A (LG CHEM, LTD. et al.) 07 November 2019 (2019-11-07) See claims 1-7. | 1-8 |
| A | KR 10-0570604 B1 (SAMSUNG SDI CO., LTD.) 12 April 2006 (2006-04-12) See entire document. | 1-8 |
| A | KR 10-2002-0011563 A (SAMSUNG SDI CO., LTD.) 09 February 2002 (2002-02-09) See entire document. | 1-8 |
| A | KR 10-2007-0027512 A (SION POWER CORPORATION) 09 March 2007 (2007-03-09) See entire document. | 1-8 |

☐ Further documents are listed in the continuation of Box C.    ☑ See patent family annex.

| | |
| --- | --- |
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **02 June 2022** | **02 June 2022** |

| Name and mailing address of the ISA/KR | Authorized officer |
| --- | --- |
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2022/002634**

| Patent document cited in search report | | | Publication date (day/month/year) | Patent family member(s) | | | Publication date (day/month/year) |
|---|---|---|---|---|---|---|---|
| KR | 10-2020-0061293 | A | 02 June 2020 | CN | 112313827 | A | 02 February 2021 |
| | | | | EP | 3780233 | A1 | 17 February 2021 |
| | | | | JP | 2021-524989 | A | 16 September 2021 |
| | | | | KR | 10-2126252 | B1 | 24 June 2020 |
| | | | | US | 2021-0242502 | A1 | 05 August 2021 |
| | | | | WO | 2020-105981 | A1 | 28 May 2020 |
| KR | 10-2019-0125740 | A | 07 November 2019 | CN | 111587507 | A | 25 August 2020 |
| | | | | EP | 3706231 | A1 | 09 September 2020 |
| | | | | EP | 3706231 | A4 | 03 March 2021 |
| | | | | JP | 2021-508148 | A | 25 February 2021 |
| | | | | US | 2021-0226254 | A1 | 22 July 2021 |
| | | | | WO | 2019-212153 | A1 | 07 November 2019 |
| KR | 10-0570604 | B1 | 12 April 2006 | KR | 10-2005-0038897 | A | 29 April 2005 |
| KR | 10-2002-0011563 | A | 09 February 2002 | CN | 1305163 | C | 14 March 2007 |
| | | | | CN | 1336696 | A | 20 February 2002 |
| | | | | EP | 1178555 | A2 | 06 February 2002 |
| | | | | EP | 1178555 | A3 | 13 May 2009 |
| | | | | JP | 2002-075446 | A | 15 March 2002 |
| | | | | KR | 10-0358808 | B1 | 25 October 2002 |
| | | | | KR | 10-2002-0011562 | A | 09 February 2002 |
| | | | | US | 2002-0045102 | A1 | 18 April 2002 |
| KR | 10-2007-0027512 | A | 09 March 2007 | AT | 467245 | T | 15 May 2010 |
| | | | | CA | 2555956 | A1 | 25 August 2005 |
| | | | | CN | 100499243 | C | 10 June 2009 |
| | | | | CN | 1998109 | A | 11 July 2007 |
| | | | | EP | 1714348 | A1 | 25 October 2006 |
| | | | | EP | 1714348 | B1 | 05 May 2010 |
| | | | | JP | 2007-522638 | A | 09 August 2007 |
| | | | | JP | 4864726 | B2 | 01 February 2012 |
| | | | | US | 2005-0175904 | A1 | 11 August 2005 |
| | | | | US | 7316868 | B2 | 08 January 2008 |
| | | | | WO | 2005-078851 | A1 | 25 August 2005 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2022002634 W
- KR 20210026115
- KR 1020200007081